# EUROPÄISCHE PATENTSCHRIFT

(11) **EP 3 258 091 B1**
(45) Veröffentlichungstag und Bekanntmachung des Hinweises auf die Patenterteilung: **14.07.2021**
(21) Anmeldenummer: 17170353.1
(22) Anmeldetag: 10.05.2017
(51) Int. Cl.: F02D 41/20, F02M 51/06, F02D 41/38, F02D 41/40

(54) **VERFAHREN ZUM BETREIBEN EINES AKTORS EINES INJEKTORS SOWIE EIN ENTSPRECHENDER AKTOR**
METHOD FOR OPERATING AN ACTUATOR OF AN INJECTOR, AND A CORRESPONDING ACTUATOR
PROCÉDÉ DE FONCTIONNEMENT D'UN ACTIONNEUR D'UN INJECTEUR ET ACTIONNEUR CORRESPONDANT

(30) Priorität: 16.06.2016 DE 102016210812
(43) Veröffentlichungstag der Anmeldung: 20.12.2017
(73) Patentinhaber: Robert Bosch GmbH, 70442 Stuttgart (DE)
(72) Erfinder: Rau, Andreas, 70469 Stuttgart (DE)

(56) Entgegenhaltungen:
- DE-A1-102009 046 424
- DE-A1-102011 078 844
- DE-A1-102014 204 093
- US-A1- 2003 029 414

## Beschreibung

Die Erfindung betrifft ein Verfahren zum Betreiben eines Aktors zur Betätigung eines eine Spritzmenge eines Injektors festlegenden Schaltventils, das einen Fluiddruck in einem Schaltraum des Injektors einstellt, wobei der Aktor elektrisch ansteuerbar ist.

### Stand der Technik

Eine entsprechendes Verfahren zum Betreiben eines Aktors zur Betätigung eines eine Spritzmenge eines Injektors festlegenden Schaltventils ist aus der DE 10 2009 046 424 A1 bekannt. Der Injektor ist Teil eines Common-Rail-Einspritzsystems, mit dem Kraftstoff, insbesondere Dieselkraftstoff in einen Brennraum einer Brennkraftmaschine, an dem das Common-Rail-Einspritzsystem verbaut ist, eingespritzt wird. Die von dem Injektor in dem zugehörigen Brennraum einzuspritzende Kraftstoffmenge muss in Abhängigkeit von Betriebszuständen der Brennkraftmaschine angepasst werden. Hierzu wird der Aktor mit einer Zielspannung beaufschlagt und eine Ist-Spannung an dem Aktor gemessen. Dabei wird dann eine Amplitude ermittelt, mit der die Ist-Spannung schwingt, wobei dann die Zielspannung in Abhängigkeit von der Amplitude beeinflusst wird.

Weiter ist aus der US 2003/029414 A1 ein Verfahren zur Steuerung eines Kraftstoffinjektors bekannt, wobei das Triggersignal für den Aktor als eine Funktion der Amplitude und der Ansteuerdauer gesteuert wird. Aus der DE 10 2014 204 093 A1 ist darüber hinaus ein Verfahren zum Betreiben eines piezoelektrischen Aktors bekannt, wobei die Lade- und Entladezeit des Aktors in Abhängigkeit vom Kraftstoffdruck und der vorgegebenen Ladezeit bestimmt werden.

Der Erfindung liegt die Aufgabe zugrunde, ein Verfahren zum Betreiben eines Aktors anzugeben, mit dem eine genaue, bedarfsorientierte Steuerung der Spritzmenge des Injektors möglich ist. Weiterhin soll ein entsprechender Aktor angegeben werden.

### Offenbarung der Erfindung

Diese Aufgabe wird dadurch gelöst, dass der Aktor so angesteuert wird, dass das Schaltventil von einer Öffnungsbewegung direkt in eine Schließbewegung umgeschaltet wird. Dieser Ausgestaltung liegt die Erkenntnis zugrunde, dass bekannte Verfahren zum Betreiben eines Aktors vorsehen, dass der Aktor so lange bestromt wird, bis das von dem Aktor betätigte Schaltventil gegen einen Hubanschlag gefahren ist. Dadurch ergibt sich eine minimale Öffnungszeit des Schaltventils zu tₘ = tₒₑ + tₐₛ + tₛ. Hierbei ist tₘ die minimale Öffnungszeit des Schaltventils, tₒₑ die Öffnungszeit, tₐₛ die Zeit am Hubanschlag und ts die Schließzeit. Je länger die Zeit tₘ ist, umso mehr Menge (Kraftstoffmenge) wird dem Schaltraum des Injektors entnommen und umso größer ist die Spritzmenge des Injektors, die durch die Verstellung einer von dem Schaltventil durch den Fluiddruck in dem Schaltraum gesteuerten Injektornadel gespritzt wird. Zur Erzielung einer guten Kleinmengenfähigkeit des Injektors bei gleichzeitig steilen Ratenflanken aufgrund dynamischer Injektorauslegung ist eine möglichst geringe Offenzeit tₘ des Schaltventils erwünscht. Dies wird erfindungsgemäß dadurch erreicht, dass das Schaltventil zur Darstellung kleiner Spritzmengen nicht gegen den Hubanschlag gefahren wird, sondern von einer Öffnungsbewegung direkt in eine Schließbewegung durch eine entsprechende Ansteuerung des Aktors umgeschaltet wird. Dadurch wird in der zuvor dargestellten Beziehung für die minimale Öffnungszeit des Schaltventils tₘ diese durch die Zeit am Hubanschlag tₐₛ reduziert. Ein solchermaßen ausgestalteter beziehungsweise angesteuerter Injektor hat eine verbesserte Kleinmengenfähigkeit bei hoher Robustheit und sehr guter Einspritzstabilität bei kürzesten Spritzabständen. Somit wird durch das erfindungsgemäße Verfahren ein zusätzlicher Freiheitsgrad geschaffen, weil beliebig kurze Öffnungszeiten des Schaltventils ermöglicht werden, wodurch die Kleinmengenfähigkeit des Injektors unabhängig von der Auslegung und einem gewünschten Verhältnis einer Ablaufdrossel zu einer Zulaufdrossel in dem Injektor, der den Schaltraum bedient, gewährleistet werden kann. Dabei wird der Aktor erfindungsgemäß selbstverständlich nur dann so angesteuert, dass das Schaltventil von einer Öffnungsbewegung direkt in eine Schließbewegung umgeschaltet wird, wenn eine geringe Spritzmenge eingestellt werden soll. Bei großen gewünschten Spritzmengen ist der Aktor herkömmlich ansteuerbar. Mit dem erfindungsgemäßen Aktor ist das beschriebene Verfahren zum Betreiben des Aktors umsetzbar.

Gemäß der Erfindung wird die elektrische Ladungsmenge des Aktors während des Ladevorgangs reduziert. Hierbei ist zu berücksichtigen, dass üblicherweise Aktoren innerhalb einer Ladezeit von beispielsweise circa 100 Mikrosekunden auf die Betriebsspannung aufgeladen werden und dann der Strom abgeschaltet wird. Soll nun die von dem Injektor eingestellte Spritzmenge reduziert werden und somit die Einspritzung möglichst schnell wieder beendet werden, um besonders kleine Spritzmengen abzusetzen, ist es vorteilhaft, wenn unmittelbar nach dem Ladevorgang ein Entladevorgang eingestellt werden könnte. Dies ist aber unter anderem aufgrund der endlichen Schaltzeiten der Bauelemente in einem Steuergerät nicht möglich, vielmehr vergeht bis zu einer möglichen Entladung eine bestimmte Pausenzeit. Wenn nun die Ladungsmenge reduziert wird, wird unabhängig von den gegebenen Zeiten erreicht, dass letztendlich das Schaltventil nicht an den Hubanschlag gefahren wird, sondern vor Erreichen des Hubanschlags wieder in die geschlossene Position gefahren wird.

Gemäß der Erfindung wird eine Grenz-Ansteuerdauer AD_{grenz} definiert, die einer minimalen Ansteuerdauer des Aktors entspricht. Diese Grenz-Ansteuerdauer AD_{grenz} wird - wie nachfolgend erläutert wird - erfindungsgemäß beeinflusst. Hierbei ist einleitend vorauszusetzen, dass beim Betrieb einer üblichen Brennkraftmaschine eine Drehmomentanforderung besteht, aus welcher eine Anforderung an eine Spritzmenge des Injektors abgeleitet wird. In Abhängigkeit von verschiedenen Parametern, wie beispielsweise Raildruck, Temperatur, Einspritzszenario und diversen Korrekturfunktionen im Steuergerät wird aus der Anforderung an die Spritzmenge üblicherweise die hierfür notwendige Ansteuerdauer AD ermittelt. Hierbei sind zwei Fälle zu unterscheiden:
1. AD ≥ AD_{grenz}. Hierbei ist die ermittelte Ansteuerdauer größer oder gleich der minimal durch das Steuergerät darstellbaren Ansteuerdauer. Dieser Fall stellt den bekannten und mit herkömmlich verfügbaren Verfahren umsetzbaren Stand der Technik dar. Aus dem im Steuergerät beispielsweise angelegten Kennfeld "Spritzmenge über Ansteuerdauer" kann aus der Anforderung an die Spritzmenge die hierfür notwendige Ansteuerdauer AD ermittelt werden. Es erfolgt eine Ansteuerung mit der zu einem Druck gehörenden Ladungsmenge.
2. AD < AD_{grenz}. Die ermittelte Ansteuerdauer ist kleiner als die Grenz-Ansteuerdauer AD_{grenz}. In diesem Fall wird die Ansteuerdauer auf AD_{grenz} gesetzt und die Differenz aus AD_{grenz} und AD über verschiedene nachfolgend angegebene Verfahren dargestellt. Ein erstes Verfahren sieht vor, dass die Differenz aus AD_{grenz} und AD über eine vorteilhafterweise druckabhängige Funktion in eine Verringerung der Ladungsmenge umgerechnet wird. Die Verringerung der Ladungsmenge kann durch eine Verringerung des Ladestroms und/oder gegebenenfalls der Ladespannung dargestellt werden. Dies gilt ausdrücklich für alle entsprechenden nachfolgenden Bezugnahmen auf die Ladungsmenge. Alternativ wird im Steuergerät eine Kennlinie hinterlegt, welche bei AD_{grenz} den Zusammenhang zwischen der Ladungsmenge und einer Spritzmenge angibt. Dieser Kennlinie kann für die geforderte Einspritzmenge die notwendige Ladungsmenge entnommen werden. In einer weiteren Variante ist in dem Steuergerät eine vorteilhafterweise druckabhängige Kennlinie hinterlegt, welcher für die geforderte Spritzmenge die notwendige Spannung entnommen werden kann. Eine weitere vorteilhafte Variante berechnet aus der Differenz zwischen geforderter Spritzmenge und der Spritzmenge bei AD_{grenz} über eine vorteilhafterweise druckabhängige Funktion die notwendige Ladungsabsenkung. Alternativ können statt der druckabhängigen Funktion im Steuergerät vorteilhafterweise druckabhängige Kennlinien hinterlegt sein, welche man für die berechnete Mengendifferenz zwischen geforderter Spritzmenge und der Spritzmenge bei AD_{grenz} die notwendige Ladungsabsenkung entnehmen kann.

In vorteilhafter Weiterbildung wird bei allen zuvor dargestellten Einstellungen der Spritzbeginn bei der erfindungsgemäßen Ansteuerung des Schaltventils durch eine Korrekturfunktion konstant gehalten.

Nachfolgend werden noch weitere vorteilhafte Ausgestaltungen des Verfahrens zum Betreiben des Aktors angegeben. In einer vorteilhaften Ausgestaltung wird die Ladungsmenge einspritztypabhängig definiert, das heißt, Voreinspritzungen, die durch den Injektor vorgenommen werden sollen, bekommen andere SollWerte für die Ladungsmenge als Haupteinspritzungen oder Nacheinspritzungen. In einer anderen vorteilhaften Ausgestaltung wird die Ladungsmenge in Abhängigkeit der geforderten Soll-Menge der Spritzmenge definiert, das heißt, kleine Soll-Mengen bekommen andere Ladungswerte als große Soll-Mengen. Ebenso sind Varianten vorgesehen, in denen die Absenkung der Ladungsmenge in Abhängigkeit der Temperatur vorgenommen werden kann.

In Weiterbildung der Erfindung wird dem Schaltventil ein ballistisches Hubverhalten aufgeprägt. Üblicherweise weisen herkömmlich angesteuerte Injektoren aufgrund der guten Nadeldynamik einen eher rechteckigen Ratenverlauf der Spritzmenge auf. Dieser rechteckige Ratenverlauf wird durch die Anlage des Schaltventils an einem Hubanschlag charakterisiert. Wenn nun das Schaltventil ohne Anlage an den Hubanschlag umschaltbar ist, wird diesem ein ballistisches Hubverhalten aufgeprägt. Dieses ballistische Hubverhalten ist dann - wie nachfolgend erläutert wird - gemäß verschiedenen Kriterien und Parametern steuerbar.

In einer zuvor beschriebenen Ausführungsform wird die Ladungsmenge druckabhängig definiert. In einer weiteren Variante wird die Ladungsmenge laufzeitabhängig definiert, das heißt, kurz nach dem Start der Brennkraftmaschine werden andere Werte vorgegeben als im Nenn-Betrieb und im Neuteil (Injektor) werden andere Werte vorgegeben als beim Ende des Lebenszyklusses des Injektors. In einer weiteren Variante der Erfindung wird die Ladungsmenge in Abhängigkeit des Aktorhubs beispielsweise gemäß einer Herstellermessung definiert. Eine weitere Variante sieht vor, dass die Ladungsmenge in Abhängigkeit des Aktorspannungsbedarfs gemäß einer Herstellermessung definiert ist. Eine wiederum weitere Variante sieht vor, dass die Ladungsmenge in Abhängigkeit eines Signals eines Drucksensors in einem Hochdruckpfad des Injektors vorgegeben wird. Eine weitere Ausgestaltung sieht vor, dass die Ladungsmenge in Abhängigkeit eines Signals eines Sensors zur Detektion der Spritzmenge, der Drehzahl der Brennkraftmaschine, der Abgastemperatur, des Lambda-Wertes oder eines Klopfsensors vorgegeben wird.

In einer weiteren Ausgestaltung der Erfindung ist vorgesehen, dass die Ladungsmenge in Abhängigkeit der Form eines Spannungsverlaufs oder eines Ladungsverlaufs an dem Aktor, der im Übrigen bevorzugt ein Piezoaktor ist, vorgegeben wird. Eine weitere Ausgestaltung der Erfindung sieht vor, dass die Ladungsmenge in Abhängigkeit einer sensorisch oder analytisch ermittelten Öffnung der Injektornadel, einer Nadelumkehr, einer Nadeloffenzeit oder einer Nadelschließzeit vorgegeben wird. Eine weitere Ausgestaltung der Erfindung sieht vor, dass die Ladungsmenge in Abhängigkeit einer sensorisch oder analytisch ermittelten Ventilöffnungszeit, einer Ventilumkehrzeit, einer Ventiloffenzeit oder einer Ventilschließzeit insbesondere der Brennkraftmaschine vorgegeben ist. Eine weitere mögliche Ausgestaltung sieht vor, dass die Ladungsmenge in Abhängigkeit des Abstandes zweier aufeinander folgender Einspritzungen, die mit dem Injektor vorgenommen werden, erfolgen. In einer weiteren Variante wird die Ladungsmenge in Abhängigkeit der Zeit zwischen einem Ladebeginn und einem Entladebeginn beziehungsweise einem Entladeende vorgegeben. In einer weiteren Variante ist schließlich vorgesehen, die Ladungsmenge in Abhängigkeit der Zeit zwischen Ladeende und Entladebeginn beziehungsweise Entladeende vorzugeben. Es wird darauf hingewiesen, dass beliebige zuvor und nachfolgend noch beschriebene Einzelmerkmale der Erfindung miteinander und untereinander kombiniert sein können.

Weitere vorteilhafte Ausgestaltungen der Erfindung sind der Zeichnungsbeschreibung zu entnehmen, in der in den Figuren dargestellte Ausführungsbeispiele der Erfindung näher beschrieben sind.

Es zeigen:
- Figur 1: einen schematischen Schnitt durch einen Injektor mit einem erfindungsgemäß betriebenen Aktor,
- Figur 2: ein Diagramm mit der Einspritzmenge Q eines Injektors über der Ansteuerdauer AD eines Aktors, der gemäß einem herkömmlich Verfahren angesteuert wird,
- Figur 3: ein Diagramm mit der Einspritzmenge Q eines Injektors über der Ansteuerdauer AD eines Aktors, der gemäß einem erfindungsgemäßen Verfahren angesteuert wird,
- Figuren 4a bis 4e: verschiedene Diagramme, in denen verschiedene Stromprofile, mit dem ein Aktor angesteuert wird, dargestellt sind,
- Figuren 5a bis 5d: in zusammenhängenden Diagrammen ein Spannungsverlauf über der Ansteuerdauer AD, ein Stromverlauf I über der Ansteuerdauer AD, ein Ventilhub Vₕ über der Ansteuerdauer AD und ein Nadelhub Nₕ über der Ansteuerdauer AD, und
- Figuren 6a, 6b: zusammengehörende Diagramme mit Kennlinien für einem Stromverlauf I über der Ansteuerdauer AD sowie einem Ladungsverlauf L über der Ansteuerdauer AD.

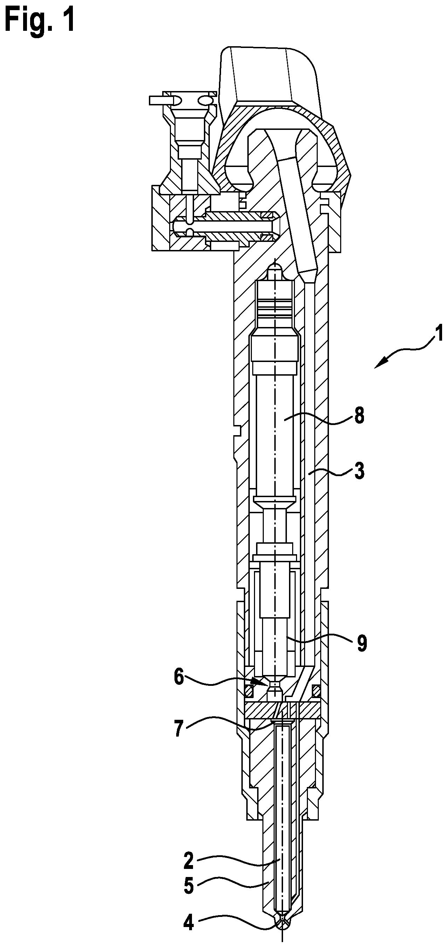

Figur 1 zeigt einen Injektor 1, der zur Einspritzung von Kraftstoff, beispielsweise Dieselkraftstoff, in einen Brennraum einer Brennkraftmaschine vorgesehen ist. Der Injektor 1 ist Teil eines Einspritzsystems, das beispielsweise als Common-Rail-Einspritzsystem ausgelegt und ausgebildet ist. Dabei wird von einer Hochdruckpumpe in einem Kraftstofftank bevorrateter Kraftstoff in einen Hochdruckspeicher gefördert, der mit einer Anzahl von Injektoren 1 verbunden ist. Jeder der Injektoren 1 kann getrennt angesteuert werden und den in dem Hochdruckspeicher unter einem Druck von beispielsweise bis zum 3.000 bar bevorrateten Kraftstoff entnehmen und in einen zugeordneten Brennraum einer Brennkraftmaschine einspritzen. Für eine solche gesteuerte Einspritzung weist der Injektor 1 eine Injektornadel 2 auf, an der über eine Hochdruckleitung 3 zugeführter Kraftstoff ansteht und bei einer Öffnungsstellung der Injektornadel 2 über zumindest eine Spritzöffnung 4 in einem die Injektornadel 2 ausnehmenden Injektornadelkörper 5 in den zugeordneten Brennraum einspritzbar ist. Die zumindest eine Spritzöffnung 4 in dem Injektornadelkörper 5 wird durch eine axiale Verstellung der Injektornadel 2 gegenüber der Hochdruckleitung 3 verschlossen oder freigegeben. Diese Verstellung der Injektornadel 2 wird von einem nicht detailliert dargestellten Schaltventil 6 in dem Injektor 1 vorgenommen, indem ein Fluiddruck, der normalerweise der Kraftstoffdruck ist, in einem stirnseitig der Injektornadel 2 angeordneten Schaltraum 7 gegenüberliegend zu der zumindest einen Spritzöffnung 4 eingestellt wird. Dabei bewirkt eine Verringerung des Fluiddrucks in dem Schaltraum 7 eine Öffnungsbewegung der Injektornadel 2 und umgekehrt eine Erhöhung des Fluiddrucks in dem Schaltraum 7 eine Schließbewegung der Injektornadel 2. Das Schaltventil 6 wird von einem Aktor 8 bewegt, der bevorzugt als Piezoaktor ausgebildet ist und bei einer Bestromung eine Längenänderung erfährt. Der Aktor 8 wirkt mit dem Schaltventil 6 direkt oder indirekt über einen Koppler 9 zusammen.

Nachfolgend werden verschiedene Verfahren zum Betreiben des Aktors 8 zur Betätigung des eine Spritzmenge des Injektors 1 festlegenden Schaltventils 6 beschrieben.

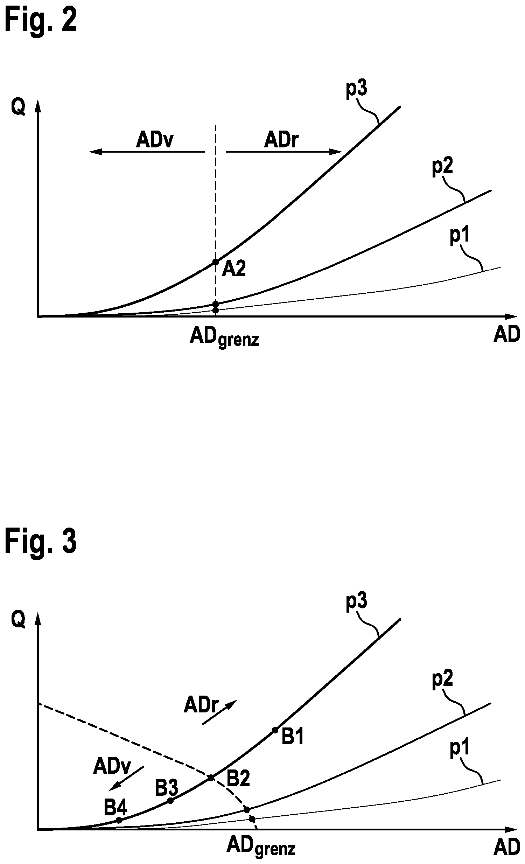

Figur 2 zeigt ein Diagramm mit der gemäß einem herkömmlichen Verfahren realisierbaren beziehungsweise einstellbaren Einspritzmenge Q des Injektors 1 über der Ansteuerdauer AD des Aktors 8 für verschiedene Einspritzdrücke p1, p2, p3. Strichliniert ist eine Linie mit einer (herkömmlichen) Grenz-Ansteuerdauer AD_{grenz} eingezeichnet, die einer minimalen Ansteuerdauer des Aktors 8 entspricht. Diese Grenzlinie stellt sich als Gerade parallel zu der Einspritzmenge Q dar, wobei links ein Bereich einer (herkömmlich nicht darstellbaren) virtuellen Ansteuerdauer ADv und rechts davon ein Bereich einer (herkömmlich darstellbaren) realen Ansteuerdauer ADr gegeben ist.

Figur 3 zeigt ein Diagramm mit der gemäß dem erfindungsgemäßen Verfahren realisierbaren beziehungsweise einstellbaren Einspritzmenge Q des Injektors 1 über der Ansteuerdauer AD des Aktors 8 für verschiedene Einspritzdrücke p1, p2, p3. Bei diesem erfindungsgemäßen Verfahren ist die Grenz-Ansteuerdauer AD_{grenz} nach links geneigt und dadurch sind auf den Linien gleichen Drucks kleinere Einspritzmengen B2, B1, B3, B4 realisierbar, die mit dem Injektor 1 eingespritzt werden können. Deutlich wird dies beispielsweise bei einem Vergleich der Einspritzmenge A2 (herkömmlich) gegenüber der Einspritzmenge B2 (erfindungsgemäß). Mit dem erfindungsgemäßen Verfahren ist auch eine virtuelle Ansteuerdauer ADv mit Einspritzmengen B3 und B4 neben der realen Ansteuerdauer ADr mit beispielsweise einer Einspritzmenge B1 realisierbar.

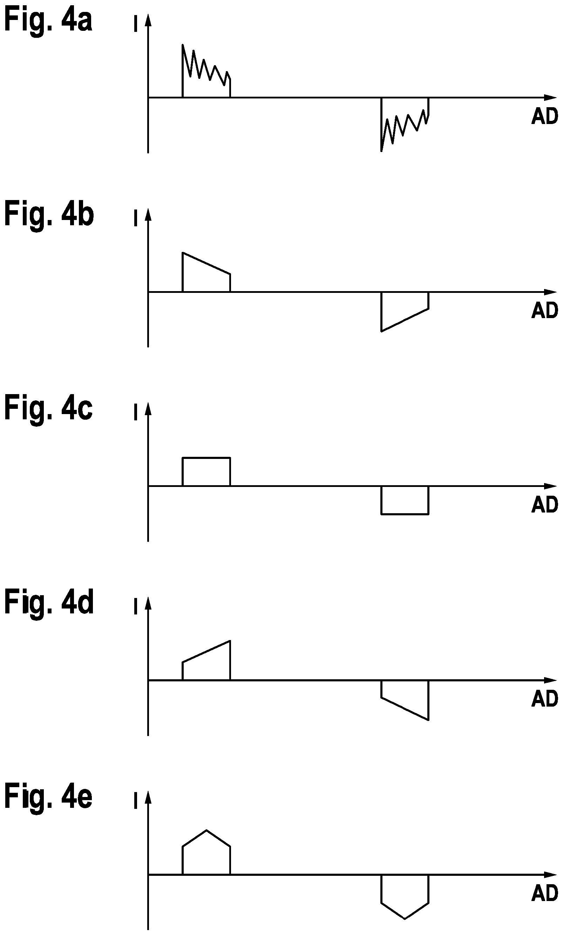

Die Figuren 4a bis 4e zeigen verschiedene Stromprofile in jeweils einem Diagramm "Strom I" über "Ansteuerdauer AD", mit denen der Aktor 8 angesteuert wird. Die jeweiligen Stromprofile entsprechen gemäß den vorherigen Ausführungen verschiedenen Ladungsmengen, mit denen der Aktor 8 beaufschlagt wird und die somit Schaltvorgänge an dem Schaltventil 6 auslösen beziehungsweise bewirken. Figur 4a zeigt eine reale Darstellung eines abnehmenden gepulsten Stromprofils, das mit der erfindungsmäßen Ansteuerung darstellbar ist beziehungsweise umgesetzt wird. Die Figur 4a zeigt ein solches Stromprofil in einer realen, gepulsten Darstellung, während die Figuren 4b bis 4e Stromprofile in einer vereinfachten (nicht gepulsten) Darstellung wiedergeben. Figur 4b zeigt ein abfallendes Stromprofil, das grundsätzlich dem der Figur 4a entspricht. Figur 4c zeigt ein horizontales Stromprofil, während das Stromprofil gemäß der Figur 4d ansteigend ist. Figur 4e zeigt ein kombiniertes Stromprofil, das erst ansteigend und dann abfallend ausgebildet ist. Bezüglich dieser Stromprofile sind aber auch noch andere Ausgestaltungen beziehungsweise Kombinationen möglich.

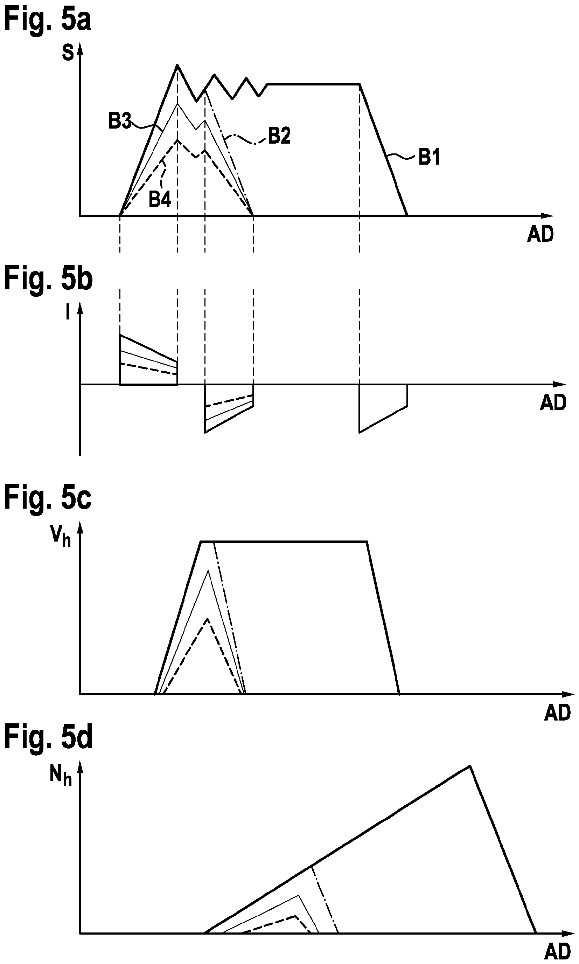

Die Figuren 5a, 5b, 5c und 5d in zusammenhängenden Diagrammen Spannungsverläufe über der Ansteuerdauer AD (Figur 5a), Stromverläufe I über der Ansteuerdauer AD (Figur 5b), Ventilhübe Vₕ über der Ansteuerdauer AD (Figur 5c) und Nadelhübe Nₕ über der Ansteuerdauer AD (Figur 5d). Die Spannungsverläufe und die Stromverläufe (Figuren 5a und 5b) betreffen den Aktor 8, während die Ventilhübe das Schaltventil 6 (Figur 5c) und die Nadelhübe die Injektornadel 2 (Figur 5d) betreffen.

Die verschiedenen Verläufe beziehungsweise Profile B1, B2, B3 und B4 bestimmen die in Figur 3 für die Druckkennlinie p3 dargestellten Einspritzmengen, die realisierbar sind. Figur 5c gibt den Ventilhub Vₕ des Schaltventils 6 wieder, wobei der ausgezogene Verlauf gemäß dem Profil B1 ein herkömmlich mit einer realen Ansteuerdauer ADr angesteuertes Schaltventil 6 bis zur Anlage an einen Hubanschlag wiedergibt. Es ergibt sich eine Öffnungszeit des Schaltventils 6 zu t = tₒₑ + tₐₛ + tₛ. Hierbei ist t die Öffnungszeit des Schaltventils 6, tₒₑ die Öffnungszeit, tₐₛ die Zeit am Hubanschlag und ts die Schließzeit. Der entsprechende in Figur 5d mit dem ebenfalls ausgezogenen Verlauf wiedergegebene Verlauf des Nadelhubs Nₕ der Injektornadel 2 weist eine zeitliche 6 Verzögerung zu dem Schaltventil 6 auf und stellt beispielsweise einen Grenzfall dar, bei der die Injektornadel 2 nach Erreichen der maximalen Öffnungsbewegung wieder in Richtung einer Schließbewegung verstellt wird. Dagegen wird insbesondere gemäß den Kennlinien B3 und B4 das Schaltventil 6 vor einer Anlage an einem Hubanschlag umgeschaltet, so dass die Injektornadel 2 schon während einer Öffnungsbewegung direkt in eine Schließbewegung umgesteuert wird und dadurch wesentlich geringere Einspritzmengen darstellbar sind. Dem Schaltventil 6 ist folglich ein ballistisches Hubverhalten aufgeprägt.

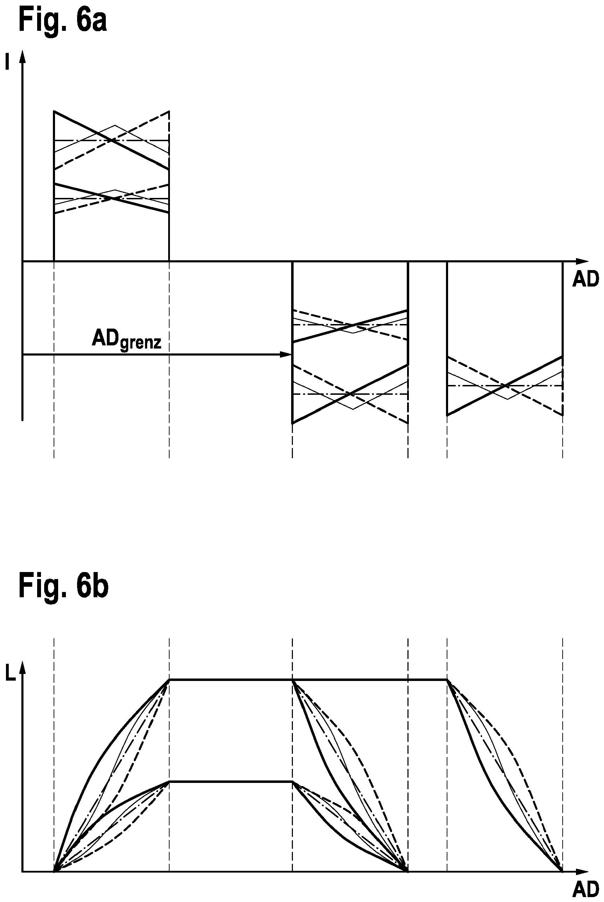

Figur 6a zeigt entsprechend den Figuren 4a bis 4e verschiedene Stromprofile, mit denen der Aktor 8 angesteuert wird.

Figur 6b zeigt in den oberen Kennlinien den Ladungsverlauf eines Aktors 8, bei dem die Ladungsmenge L während des Ladevorgangs konventionell gemäß den verschiedenen Verläufen gemäß der Figur 6a und gemäß den Figuren 2 im Bereich AD ≥ AD_{grenz} ausgelegt ist. Figur 6b zeigt in den unteren Kennlinien den Ladungsverlauf eines Aktors 8, bei dem die Ladungsmenge L während des Ladevorgangs erfindungsgemäß gemäß den verschiedenen Verläufen gemäß der Figur 6a und gemäß den Figuren 3 im Bereich AD < AD_{grenz} ausgelegt ist, indem die Ladungsmenge L deutlich reduziert ist.

## Patentansprüche

1. Verfahren zum Betreiben eines Injektors (1) zum Einspritzen von Kraftstoff, mit einem Piezoaktor (8), mit dem ein Schaltventil (6) betreibbar ist, das eine Spritzmenge des Injektors (1) festlegt, wobei das Schaltventil (6) einen Fluiddruck in einem Schaltraum (7) des Injektors (1) einstellt und der Piezoaktor (8) durch ein Steuergerät elektrisch ansteuerbar ist, wobei der Schaltraum (7) stirnseitig einer Injektornadel (2) angeordnet ist gegenüberliegend zu mindestens einer Spritzöffnung (4), wobei eine Verringerung des Fluiddrucks in dem Schaltraum (7) eine Öffnungsbewegung der Injektornadel (2) bewirkt und umgekehrt eine Erhöhung des Fluidrucks in dem Schaltraum (7) eine Schließbewegung der Injektornadel (2), wobei der Aktor (8) so angesteuert wird, dass das Schaltventil (6) von einer Öffnungsbewegung direkt in eine Schließbewegung umgeschaltet wird, **gekennzeichnet durch** folgende Verfahrensschritte:
a) Bestimmen einer minimalen, durch das Steuergerät darstellbaren Grenz-Ansteuerdauer (AD_{grenz}),
b) Bestimmen einer einzuspritzenden Kraftstoffmenge aus einer Drehmomentanforderung beim Betrieb einer Brennkraftmaschine,
c) Ermitteln einer für die einzuspritzende Kraftstoffmenge geeigneten Ansteuerdauer des Piezoaktors (8),
d) Ist die ermittelte Ansteuerdauer AD kleiner als die Grenz-Ansteuerdauer AD_{grenz}, so wird die Ansteuerdauer AD des Piezoaktors (8) gleich AD_{grenz} gesetzt und aus der Differenz von AD_{grenz} und AD eine Ladungsmenge bestimmt, die gegenüber der Ladungsmenge bei einer Ansteuerdauer AD ≥ AD_{grenz} verringert ist,
e) Aufladen des Piezoaktors (8) mit dieser verringerten elektrischen Ladungsmenge.

2. Verfahren nach Anspruch 1,
**dadurch gekennzeichnet, dass** das Schaltventil (6) vor einer Anlage an einen Hubanschlag umgeschaltet wird.

3. Verfahren nach Anspruch 2,
**dadurch gekennzeichnet, dass** dem Schaltventil (6) ein ballistisches Hubverhalten aufgeprägt wird.

4. Verfahren nach Anspruch 1,
**dadurch gekennzeichnet, dass** die Verringerung der Ladungsmenge druckabhängig bestimmt wird.

5. Verfahren nach Anspruch 1,
**dadurch gekennzeichnet, dass** die Verringerung der Ladungsmenge über eine Kennlinie erfolgt, die in dem den Aktor (8) ansteuernden Steuergerät abgelegt ist.

## Claims

1. Method for operating an injector (1) for injecting fuel, having a piezo actuator (8) by means of which a switching valve (6), which defines an injection quantity of the injector (1), can be operated, wherein the switching valve (6) sets a fluid pressure in a switching chamber (7) of the injector (1) and the piezo actuator (8) is electrically actuatable by a control unit, wherein the switching chamber (7) is arranged at the end side of an injector needle (2) oppositely in relation to at least one injection opening (4), wherein a reduction of the fluid pressure in the switching chamber (7) causes an opening movement of the injector needle (2) and, conversely, an increase of the fluid pressure in the switching chamber (7) causes a closing movement of the injector needle (2), wherein the actuator (8) is actuated such that the switching valve (6) is switched over from an opening movement directly into a closing movement, **characterized by** the following method steps:
a) determining a minimum limit actuation period (AD_{grenz}) that can be implemented by the control unit,
b) determining a fuel quantity to be injected from a torque demand during the operation of an internal combustion engine,
c) ascertaining an actuation period of the piezo actuator (8) that is suitable for the fuel quantity to be injected,
d) if the ascertained actuation period AD is shorter than the limit actuation period AD_{grenz}, then the actuation period AD of the piezo actuator (8) is set equal to AD_{grenz}, and, from the difference between AD_{grenz} and AD, a charge quantity is determined that is reduced in relation to the charge quantity in the case of an actuation period AD ≥ AD_{grenz},
e) charging the piezo actuator (8) with this reduced electrical charge quantity.

2. Method according to Claim 1,
**characterized in that** the switching valve (6) is switched over before making contact with a stroke stop.

3. Method according to Claim 2,
**characterized in that** a ballistic stroke characteristic is imparted to the switching valve (6) .

4. Method according to Claim 1,
**characterized in that** the reduction of the charge quantity is determined in a pressure-dependent manner.

5. Method according to Claim 1,
**characterized in that** the reduction of the charge quantity is performed by way of a characteristic curve that is stored in the control unit that actuates the actuator (8).

## Revendications

1. Procédé permettant de faire fonctionner un injecteur (1) pour injecter du carburant, comprenant un actionneur piézoélectrique (8) qui permet de faire fonctionner une soupape de commutation (6) qui définit un débit de l'injecteur (1), la soupape de commutation (6) réglant une pression de fluide dans un espace de commutation (7) de l'injecteur (1), et l'actionneur piézoélectrique (8) pouvant être piloté de manière électrique par un appareil de commande, l'espace de commutation (7) étant disposé sur la face d'une aiguille d'injecteur (2) à l'opposé d'au moins un orifice d'injection (4), une diminution de la pression de fluide dans l'espace de commutation (7) ayant pour effet un mouvement d'ouverture de l'aiguille d'injecteur (2), et inversement une augmentation de la pression de fluide dans l'espace de commutation (7) ayant pour effet un mouvement de fermeture de l'aiguille d'injecteur (2), l'actionneur (8) étant piloté de telle sorte que la soupape de commutation (6) est commutée d'un mouvement d'ouverture directement vers un mouvement de fermeture,
**caractérisé par** les étapes de procédé suivantes consistant à :
a) déterminer une durée de pilotage limite (AD_{grenz}) minimale pouvant être représentée par l'appareil de commande,
b) déterminer une quantité de carburant à injecter à partir d'une demande de couple lors du fonctionnement d'un moteur à combustion interne,
c) établir une durée de pilotage de l'actionneur piézoélectrique (8), adaptée à la quantité de carburant à injecter,
d) si la durée de pilotage AD établie est inférieure à la durée de pilotage limite AD_{grenz}, alors la durée de pilotage AD de l'actionneur piézoélectrique (8) est réglée sur AD_{grenz}, et à partir de la différence entre AD_{grenz} et AD, une quantité de charge est déterminée qui est diminuée par rapport à la quantité de charge pour une durée de pilotage AD ≥ AD_{grenz},
e) recharger l'actionneur piézoélectrique (8) avec cette quantité de charge électrique diminuée.

2. Procédé selon la revendication 1, **caractérisé en ce que** la soupape de commutation (6) est commutée avant de venir en appui contre une butée de course.

3. Procédé selon la revendication 2, **caractérisé en ce qu'**un comportement de course balistique est conféré à la soupape de commutation (6).

4. Procédé selon la revendication 1, **caractérisé en ce que** la diminution de la quantité de charge est déterminée en fonction de la pression.

5. Procédé selon la revendication 1, **caractérisé en ce que** la diminution de la quantité de charge est effectuée par l'intermédiaire d'une courbe caractéristique qui est mémorisée dans l'appareil de commande pilotant l'actionneur (8).
